# EUROPEAN PATENT APPLICATION

(11) **EP 2 985 847 A2**
(43) Date of publication of application: **17.02.2016**
(21) Application number: 14189891.6
(22) Date of filing: 22.10.2014
(51) Int. Cl.: H02J 5/00, H02J 7/02, H02J 50/00

(54) **Wireless charging device**

(30) Priority: 21.07.2014 TW 103212982 U
(71) Applicant: Lien Chang Electronic Enterprise Co., Ltd., Taipei-City 11469 (TW)
(72) Inventor: LEE, Hsueh-Han, 106 Taipei City (TW)
(74) Representative: Viering, Jentschura & Partner mbB Patent- und Rechtsanwälte

(57) **Abstract**

A wireless charging device includes a wireless transmitting module (1) and a wireless receiving module (2). The wireless transmitting module (1) includes a first outer casing (10) and a wireless transmitting unit (13) disposed inside the first outer casing (10). The wireless receiving module (2) includes a second outer casing (20), a wireless receiving unit (21) disposed inside the second outer casing (20), and at least one electrical connector (23) exposed outside the second outer casing (20) and electrically contacting a portable electronic device (P). The wireless transmitting module (1) includes a base seat (17), the first outer casing (10) is pivotally disposed on the base seat (17), the first outer casing (10) is inclined by a predetermined acute angle (*θ*) with respect to the base seat (17), the second outer casing (20) is disposed on the first outer casing (10) and inclined to the base seat (17), and the portable electronic device (P) is disposed on the second outer casing (20) and inclined to the base seat (17).

## Description

### BACKGROUND OF THE INVENTION

### 1. Field of the Invention

The instant disclosure relates to a wireless charging device, and more particularly to a wireless charging device for charging at least one portable electronic device that is inclined to a horizontal plane.

### 2. Description of Related Art

With the continuous progress of technology and science, the demand for electronic devices by general consumers is increasingly upgraded, especially for consumer electronic products. Electronic devices, which were bulky in size, such as optic disk players, household telephones, and desk-top computers, are being changed to compact and portable electronic products of high performance, such as multimedia players (for example MPEG Audio Layer-3, MP3), mobile phones, and notebook computers, all leading to a more efficient life for human beings.

Most of such portable electronic products, including the multimedia players and mobile phones, are powered by rechargeable batteries or cells, such as nickel hydride battery and lithium battery. The rechargeable battery is re-chargeable through a charging device or charger, which is composed of a charging seat and an electrical connector. The charging seat forms a charging chamber in which the rechargeable battery is positioned, while the electrical connector is set in connection with a power socket, such as a wall outlet to supply a required voltage or current to charge the rechargeable battery. On the other hand, the electronic device, such as notebook computer, is provided with an adaptor that is electrically connectable with the wall outlet, whereby the adaptor that receives electrical power from the wall outlet supplies a required voltage or current to the notebook computer. Since the portable electronic products must be powered through the adaptor or by a rechargeable battery, those who attempt to carry these products outdoors must also carry various adaptors or chargers. This is very inconvenient for the users of the products and makes the use inconvenient. Further, the charging device or the adaptor must use connection wires to transmit electrical power for charging the rechargeable battery. This limits the range where the charging device or the adaptor is useful.

### SUMMARY OF THE INVENTION

One aspect of the instant disclosure relates to a wireless charging device for charging at least one portable electronic device that is inclined to a horizontal plane.

One of the embodiments of the instant disclosure provides a wireless charging device, comprising: a wireless transmitting module and a wireless receiving module. The wireless transmitting module includes a first outer casing, a power storage unit disposed inside the first outer casing, a first control circuit unit disposed inside the first outer casing and electrically connected to the power storage unit, and a wireless transmitting unit disposed inside the first outer casing and electrically connected to the first control circuit unit for generating electromagnetic fields. The wireless receiving module includes a second outer casing, a wireless receiving unit disposed inside the second outer casing for wirelessly receiving the electromagnetic fields generated by the wireless transmitting unit, a second control circuit unit disposed inside the second outer casing and electrically connected to the wireless receiving unit, and at least one electrical connector exposed outside the second outer casing and electrically connected between the second control circuit unit and a portable electronic device. The wireless transmitting module includes a base seat, the first outer casing is pivotally disposed on the base seat, the first outer casing is inclined by a predetermined acute angle with respect to the base seat, the second outer casing is disposed on the first outer casing and inclined to the base seat, and the portable electronic device is disposed on the second outer casing and inclined to the base seat.

Another one of the embodiments of the instant disclosure provides a wireless charging device, comprising: a wireless transmitting module and a wireless receiving module. The wireless transmitting module includes a first outer casing and a wireless transmitting unit disposed inside the first outer casing for generating electromagnetic fields. The wireless receiving module includes a second outer casing, a wireless receiving unit disposed inside the second outer casing for wirelessly receiving the electromagnetic fields generated by the wireless transmitting unit, and at least one electrical connector exposed outside the second outer casing and electrically contacting a portable electronic device. The wireless transmitting module includes a base seat, the first outer casing is pivotally disposed on the base seat, the first outer casing is inclined by a predetermined acute angle with respect to the base seat, the second outer casing is disposed on the first outer casing and inclined to the base seat, and the portable electronic device is disposed on the second outer casing and inclined to the base seat.

Yet another one of the embodiments of the instant disclosure provides a wireless charging device, comprising: a wireless transmitting module and a wireless receiving module. The wireless transmitting module includes a first outer casing, a power storage unit disposed inside the first outer casing, a first control circuit unit disposed inside the first outer casing and electrically connected to the power storage unit, and a wireless transmitting unit disposed inside the first outer casing and electrically connected to the first control circuit unit for generating electromagnetic fields. The wireless receiving module includes a second outer casing, a wireless receiving unit disposed inside the second outer casing for wirelessly receiving the electromagnetic fields generated by the wireless transmitting unit, a second control circuit unit disposed inside the second outer casing and electrically connected to the wireless receiving unit, and at least one electrical connector exposed outside the second outer casing and electrically connected between the second control circuit unit and a portable electronic device. The first outer casing is inclined to a horizontal plane, the second outer casing is obliquely disposed on the first outer casing, and the portable electronic device is obliquely disposed on the second outer casing.

More precisely, the base seat has a positioning convex block or a positioning concave groove on the top surface thereof, and the second outer casing has a plurality of skidproof pads disposed on the rear surface thereof for contacting the first outer casing.

More precisely, one of short sides of the first outer casing is pivotally disposed on one of short sides of the base seat, the second outer casing is separated from the base seat by a predetermined distance, and a bottom portion of the portable electronic device is positioned between the positioning convex block and the top surface of the base seat or inside the positioning concave groove.

More precisely, one of long sides of the first outer casing is pivotally disposed on one of long sides of the base seat, the second outer casing is separated from the base seat by a predetermined distance, and a bottom portion of the portable electronic device is positioned between the positioning convex block and the top surface of the base seat or inside the positioning concave groove.

Therefore, the wireless charging device can be applied to charge the inclined portable electronic device as a result of the design of "the first outer casing is pivotally disposed on the base seat" and "the first outer casing is inclined by a predetermined acute angle with respect to the base seat". Hence, when the first outer casing is inclined to a horizontal plane, the second outer casing is obliquely disposed on the first outer casing, and the portable electronic device is obliquely disposed on the second outer casing, thus it is convenient for the user to watch the information provided by the display of the portable electronic device.

To further understand the techniques, means and effects of the instant disclosure applied for achieving the prescribed objectives, the following detailed descriptions and appended drawings are hereby referred to, such that, and through which, the purposes, features and aspects of the instant disclosure can be thoroughly and concretely appreciated. However, the appended drawings are provided solely for reference and illustration, without any intention to limit the instant disclosure.

### BRIEF DESCRIPTION OF THE DRAWINGS

FIG. 1 shows a perspective, exploded, schematic view of the wireless charging device according to the instant disclosure;
FIG. 2 shows a perspective, assembled, schematic view of the wireless charging device according to the instant disclosure;
FIG. 3 shows a function block diagram of the wireless charging device according to the instant disclosure;
FIG. 4 shows a perspective, schematic view of preparing to charge up the wireless charging device according to the instant disclosure;
FIG. 5 shows a perspective, schematic view of preparing to charge up the portable electronic device according to the instant disclosure;
FIG. 6 shows a perspective, schematic view of charging up the portable electronic device horizontally disposed on the wireless charging device according to the instant disclosure;
FIG. 7 shows a lateral, cross-sectional, schematic view of preparing to receive the wireless receiving module inside one type of the first outer casing according to the instant disclosure;
FIG. 8 shows a perspective, exploded, schematic view of another wireless charging device according to the instant disclosure;
FIG. 9 shows a perspective, schematic view of charging up the portable electronic device horizontally disposed on another wireless charging device according to the instant disclosure;
FIG. 10 shows a perspective, schematic view of charging up the portable electronic device obliquely disposed on another wireless charging device according to the instant disclosure;
FIG. 11 shows a lateral, schematic view of charging up the portable electronic device obliquely disposed on another wireless charging device through the positioning convex block according to the instant disclosure;
FIG. 12 shows a lateral, schematic view of charging up the portable electronic device obliquely disposed on another wireless charging device through the positioning concave groove according to the instant disclosure;
FIG. 13 shows a perspective, schematic view of charging up the portable electronic device obliquely disposed on yet another wireless charging device according to the instant disclosure;
FIG. 14 shows a lateral, schematic view of charging up the portable electronic device obliquely disposed on yet another wireless charging device through the positioning convex block according to the instant disclosure; and
FIG. 15 shows a lateral, schematic view of charging up the portable electronic device obliquely disposed on yet another wireless charging device through the positioning concave groove according to the instant disclosure.

### DETAILED DESCRIPTION OF THE PREFERRED EMBODIMENTS

The embodiments of "a wireless charging device" of the instant disclosure are described. Other advantages and objectives of the instant disclosure can be easily understood by one skilled in the art from the disclosure. The instant disclosure can be applied in different embodiments. Various modifications and variations can be made to various details in the description for different applications without departing from the scope of the instant disclosure. The drawings of the instant disclosure are provided only for simple illustrations, but are not drawn to scale and do not reflect the actual relative dimensions. The following embodiments are provided to describe in detail the concept of the instant disclosure, and are not intended to limit the scope thereof in any way.

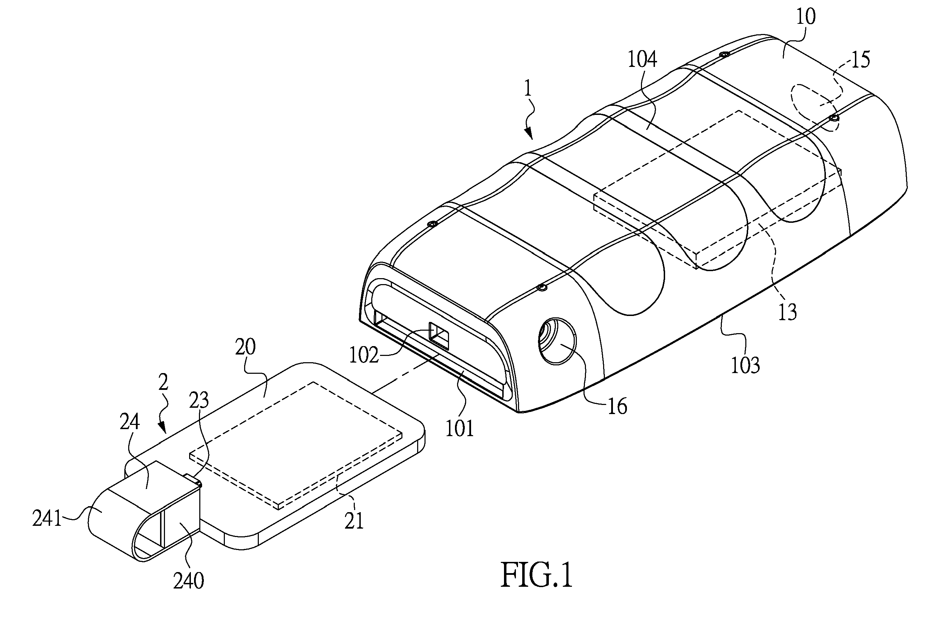

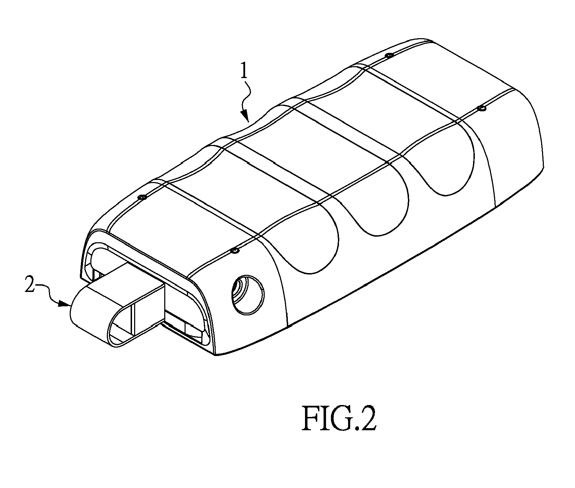

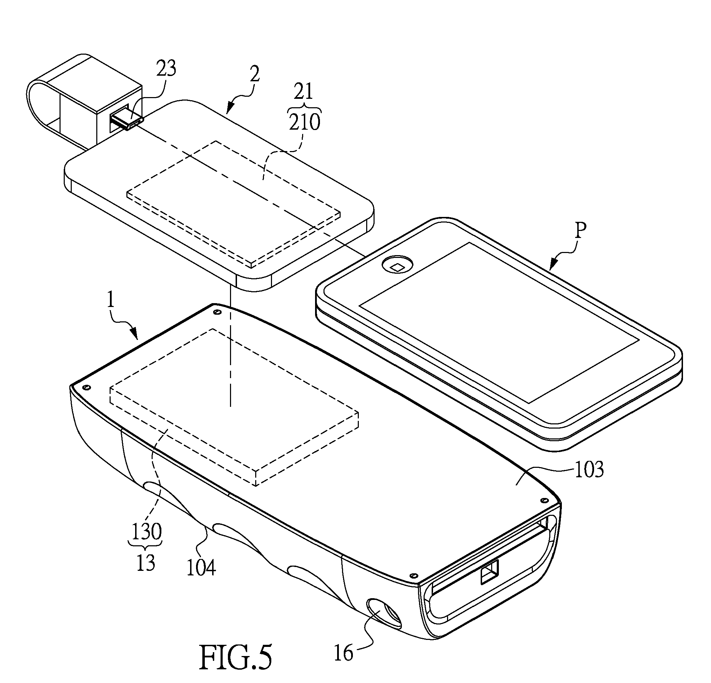

Referring to FIG. 1 to FIG. 6, the instant disclosure provides a wireless charging device with storage function, comprising: a wireless transmitting module 1 and a wireless receiving module 2.

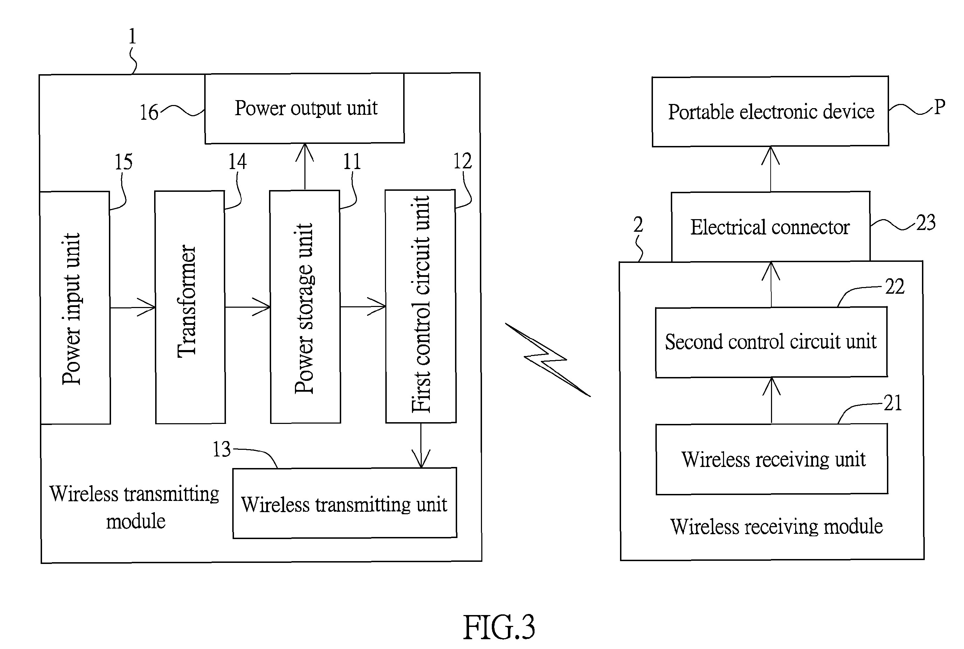

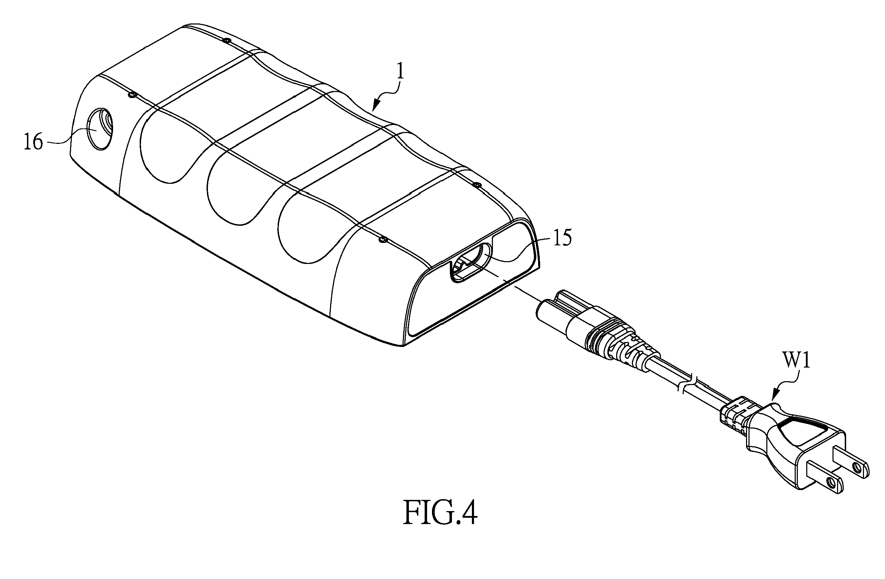

First, referring to FIG. 1 to FIG. 4, the wireless transmitting module 1 includes a first outer casing 10, a power storage unit 11 disposed inside the first outer casing 10, a first control circuit unit 12 disposed inside the first outer casing 10 and electrically connected to the power storage unit 11, and a wireless transmitting unit 13 disposed inside the first outer casing 10 and electrically connected to the first control circuit unit 12 for generating electromagnetic fields or electromagnetic signals. More precisely, the first outer casing 10 has a placing platform 103 for carrying or supporting the wireless receiving module 2 and a non-slip structure 104 opposite to the placing platform 103, and the placing platform 103 and the non-slip structure 104 are respectively disposed on two opposite surfaces of the first outer casing 10. In addition, the wireless transmitting module 1 further includes a transformer 14 disposed inside the first outer casing 10 and electrically connected to the power storage unit 11, a power input unit 15 electrically connected to the transformer 14, and at least one power output unit 16 electrically connected to the power storage unit 11. For instance, referring to FIG. 3 and FIG. 4, when the power transmission line W1 having a 8-shaped plug, a USB plug or any type of plug is electrically connected to the power input unit 15 having an 8-shaped socket, a USB socket or any type of socket, the power source can sequentially pass through the power transmission line W1, the power input unit 15 and the transformer 14 to charge up the power storage unit 11, thus the wireless transmitting module 1 can be used as a power supply. Of course, the transformer 14 can be omitted from the wireless transmitting module 1, so that the power input unit 15 can be electrically connected to the power storage unit 11 directly.

Moreover, referring to FIG. 1 to FIG. 3, the wireless receiving module 2 includes a second outer casing 20, a wireless receiving unit 21 disposed inside the second outer casing 20 for wirelessly receiving the electromagnetic fields generated by the wireless transmitting unit 13, a second control circuit unit 22 disposed inside the second outer casing 20 and electrically connected to the wireless receiving unit 21, and at least one electrical connector 23 exposed outside or from the second outer casing 20 and electrically connected between the second control circuit unit 22 and a portable electronic device P (such as a mobile phone). More precisely, the wireless receiving module 2 further includes a support unit 24 connected to the second outer casing 20 for supporting the at least one electrical connector 23. In addition, the support unit 24 has a support body 240 connected to the second outer casing 20 for fixing the height of the at least one electrical connector 23 relative to the second outer casing 20 and a pull ring 241 connected to the support body 240 and opposite to the at least one electrical connector 23, and the pull ring 241 is provided for the user to hold it.

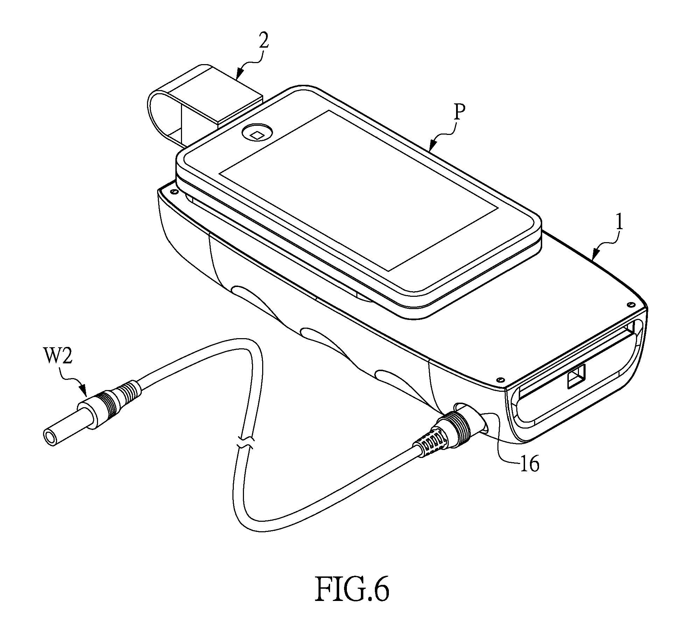

Furthermore, referring to FIG. 3, FIG. 5 and FIG. 6, when the wireless transmitting module 1 is overturned by 180 degrees, the wireless transmitting module 1 can be firmly placed on any plane through the non-slip structure 104. After inserting the at least one electrical connector 23 of the wireless receiving module 2 into the USB socket (not shown) of the portable electronic device P for electrically connecting the at least one electrical connector 23 with the portable electronic device P, the portable electronic device P can be placed on the placing platform 103 of the first outer casing 10 as shown in FIG. 6. When AC (Alternating Current) power source generated by the power storage unit 11 is transmitted to the wireless transmitting unit 13 through the first control circuit unit 12, the transmitting coil 130 of the wireless transmitting unit 13 can generate an AC (alternating Current) electromagnetic field through the AC power source. When the AC electromagnetic field generated from the transmitting coil 130 of the wireless transmitting unit 13 is wirelessly received by the receiving coil 210 of the wireless receiving unit 21, the AC electromagnetic field can be transformed into an electrical energy through the second control circuit unit 22, and then the electrical energy can be transmitted to the portable electronic device P to charge up the portable electronic device P through the at least one electrical connector 23.

It is worth mentioning that referring to FIG. 6, when the wireless transmitting module 1 and the wireless receiving module 2 are mated with each other to charge up the portable electronic device P, the wireless transmitting module 1 can be used as a power supply to charge up another portable electronic device (such as a notebook or another mobile phone, not shown) by matching the at least one power output unit 16 (such as a DC jack, a USB socket or any type of socket) and another power transmission line W1.

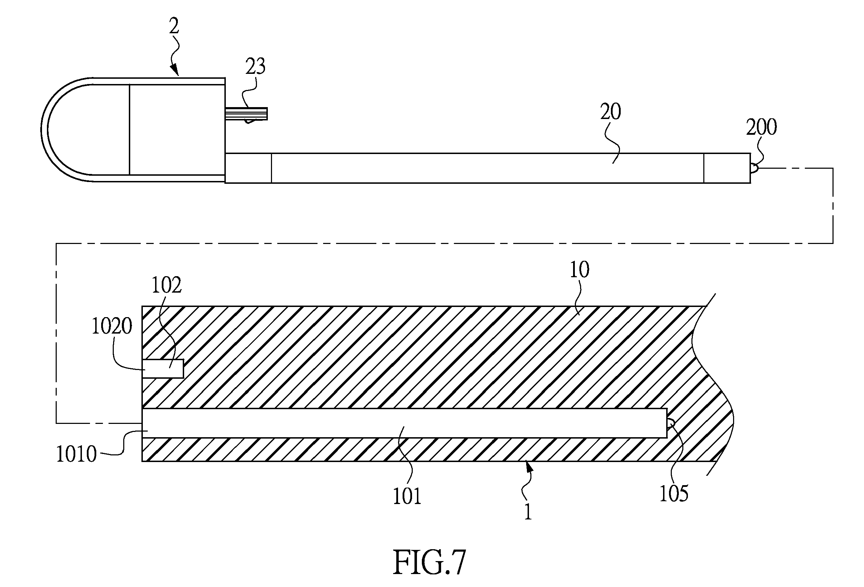

Besides, referring to FIG. 1, FIG. 2 and FIG. 7, the first outer casing 10 of the wireless transmitting module 1 has at least one first receiving space 101 corresponding to the second outer casing 20 and at least one second receiving space 102 corresponding to the at least one electrical connector 23, and both the at least one first receiving space 101 and the at least one second receiving space 102 are formed on the same lateral side of the first outer casing 10. More precisely, the second outer casing 20 has a first opening 1010 communicated with the at least one first receiving space 101 and a second opening 1020 communicated with the at least one second receiving space 102. When the user wants to store the wireless receiving module 2 in the wireless transmitting module 1, the second outer casing 20 can be received inside the at least one first receiving space 101 of the first outer casing 10 through the at least one first opening 1010, and the at least one electrical connector 23 can be received inside the at least one second receiving space 102 of the first outer casing 10 through the at least one second opening 1020. For example, referring to FIG. 7, the at least one first receiving space 101 and the at least one second receiving space 102 are separated from each other and not communicated with each other, and the first opening 1010 of the at least one first receiving space 101 and the second opening 1020 of the at least one second receiving space 102 are separated from each other and not communicated with each other.

Moreover, referring to FIG. 1, FIG. 2 and FIG. 7, the first outer casing 10 has a first retaining structure 105 (such as a retaining groove) disposed inside the at least one first receiving space 101, the second outer casing 20 has a second retaining structure 200 (such as a retaining block) corresponding to the first retaining structure 105. When the second outer casing 20 and the at least one electrical connector 23 of the wireless receiving module 2 are respectively received inside the at least one first receiving space 101 and the at least one second receiving space 102 of the first outer casing 10, the first outer casing 10 and the at least one electrical connector 23 can be respectively retained inside the at least one first receiving space 101 and the at least one second receiving space 102 by retainably or slidably matching the first retaining structure 105 and the second retaining structure 200, for preventing the wireless receiving module 2 from being separated easily from the wireless transmitting module 1.

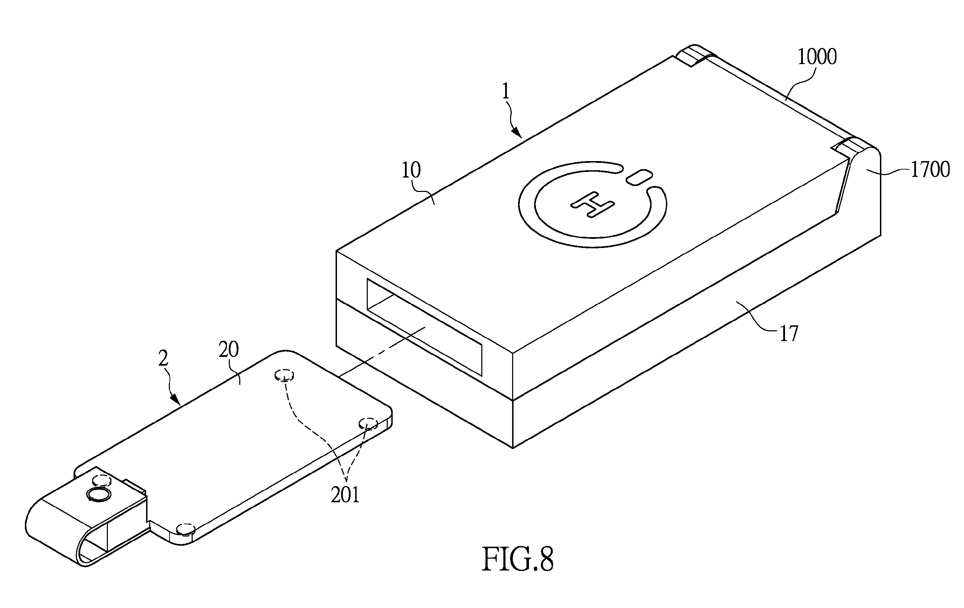

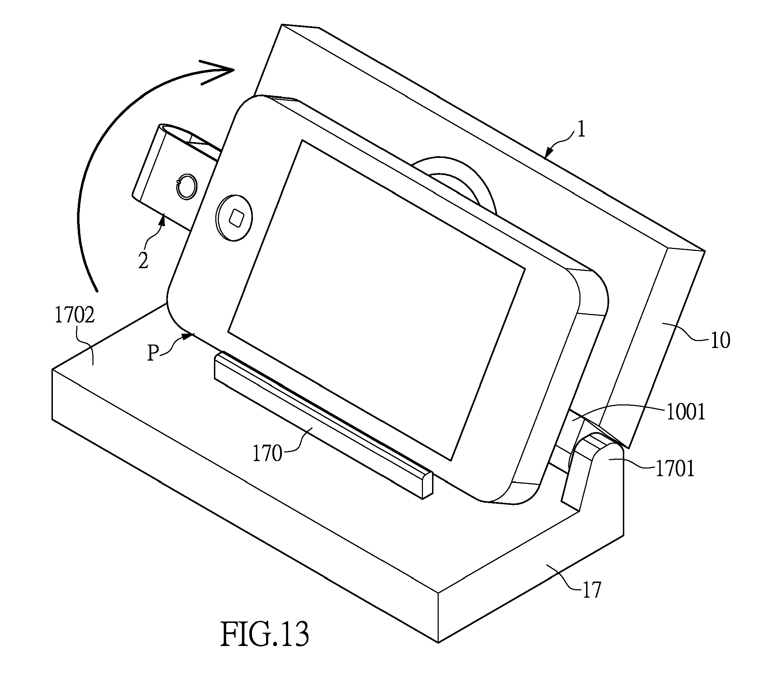

Furthermore, referring to FIG. 8 to FIG. 15, the wireless transmitting module 1 further includes a base seat 17, and the first outer casing 10 is pivotally disposed on (or pivoted to) the base seat 17. For example, with regard to one practicable pivoting embodiment, referring to FIG. 8 to FIG. 12, one of short sides 1000 of the first outer casing 10 is pivotally disposed on one of short sides 1700 of the base seat 17. With regard to another practicable pivoting embodiment, referring to FIG. 13 to FIG. 15, one of the long sides 1001 of the first outer casing 10 is pivotally disposed on one of the long sides 1701 of the base seat 17.

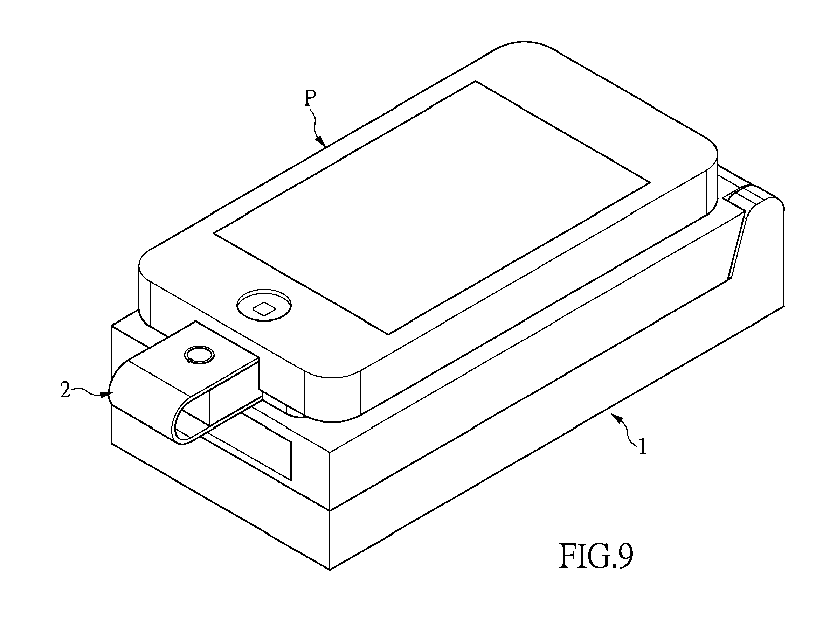

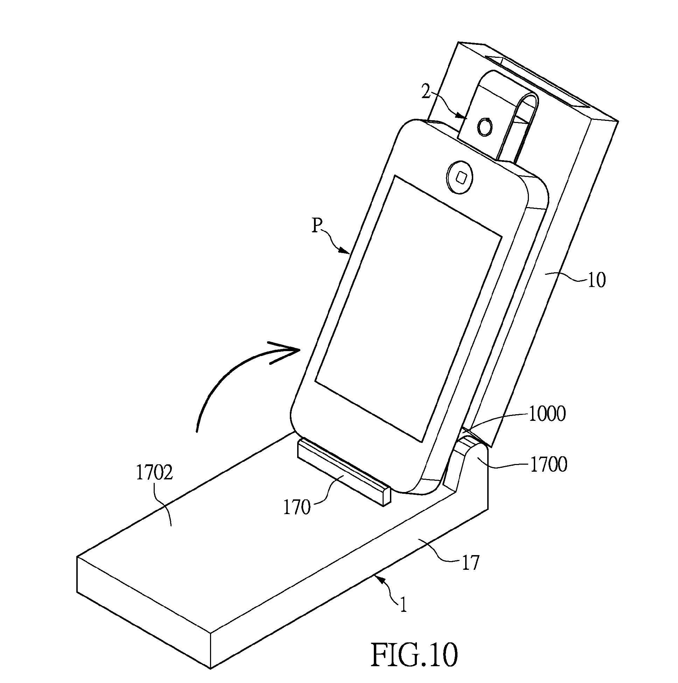

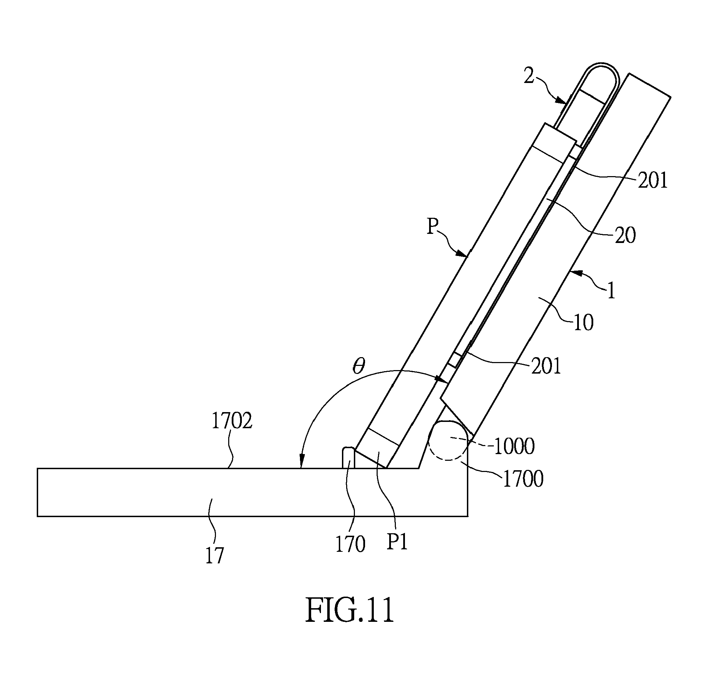

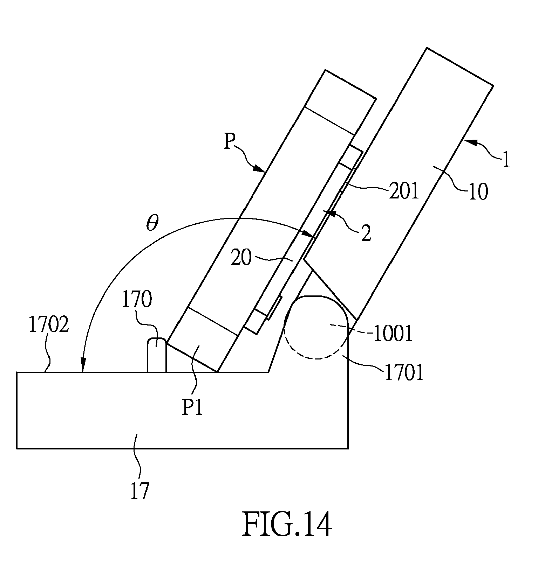

More precisely, with regard to one practicable charging embodiment, referring to FIG. 8 and FIG. 9, the portable electronic device P can be horizontally placed on the wireless transmitting module 1 and charged by matching the wireless transmitting module 1 and the wireless receiving module 2. With regard to another practicable charging embodiment, referring to FIG. 10 and FIG. 11 (or FIG. 13 and FIG. 14), when the first outer casing 10 is upwardly rotated relative to the base seat 17 by a predetermined angle (shown as the arrow in FIG. 10), the first outer casing 10 is inclined by a predetermined acute angle *θ* with respect to the base seat 17. Under this status, referring to FIG. 11, when the second outer casing 20 is disposed on the first outer casing 10 and inclined to the base seat 17, the portable electronic device P is disposed on the second outer casing 20 and inclined to the base seat 17. In other words, when the portable electronic device P is charging by matching the wireless transmitting module 1 and the wireless receiving module 2, the portable electronic device P can be obliquely disposed on the base seat 17 and leaned against the first outer casing 10 through the wireless receiving module 2, thus it is convenient for the user to watch the information provided by the display of the portable electronic device P.

For example, referring to FIG. 10 and FIG. 11 (or FIG. 13 and FIG. 14), the base seat 17 has a positioning convex block 170 disposed on the top surface 1702 thereof, thus when the portable electronic device P is obliquely disposed on the base seat 17 and leaned against the first outer casing 10 through the wireless receiving module 2, the second outer casing 20 can be separated from the base seat 17 by a predetermined distance, and the bottom portion P1 of the portable electronic device P can be positioned between the positioning convex block 170 and the top surface 1702 of the base seat 17. However, this is merely an example and is not meant to limit the instant disclosure.

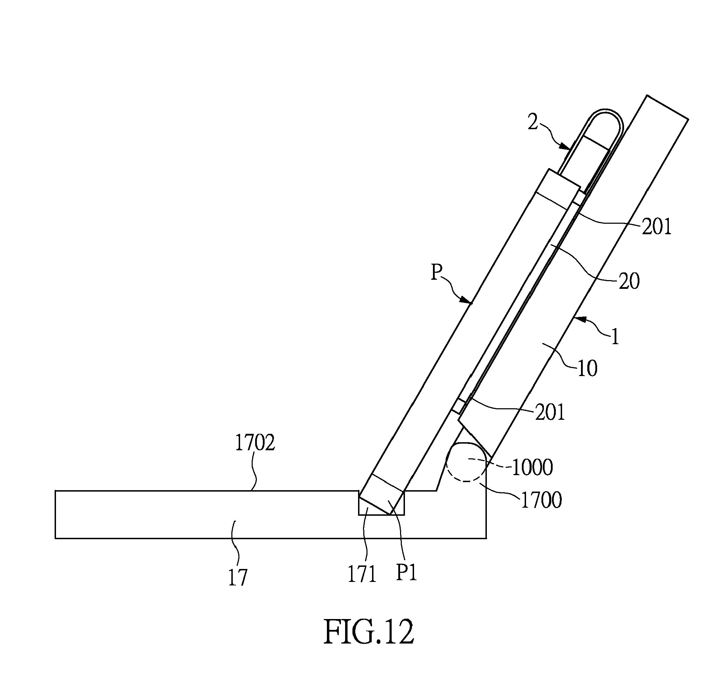

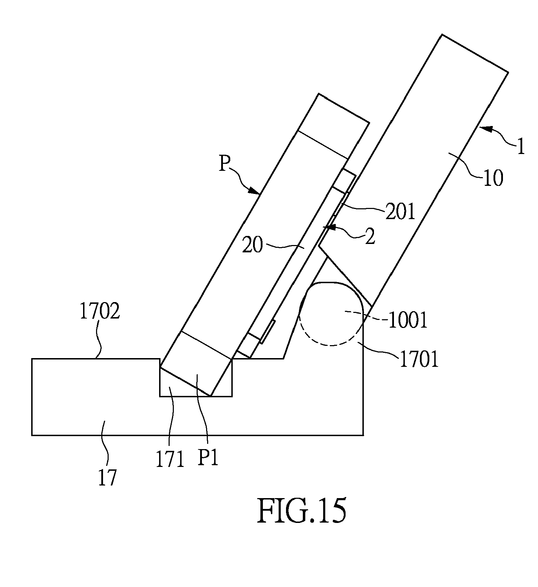

For example, referring to FIG. 12 or FIG. 15, the base seat 17 has a positioning concave groove 171 formed on the top surface 1702 thereof, thus when the portable electronic device P is obliquely disposed on the base seat 17 and leaned against the first outer casing 10 through the wireless receiving module 2, the second outer casing 20 can be separated from the base seat 17 by a predetermined distance, and the bottom portion P1 of the portable electronic device P can be directly positioned inside the positioning concave groove 171. However, this is merely an example and is not meant to limit the instant disclosure.

It is worth mentioning that, referring to FIG. 8 and FIG. 11 (or FIG. 14), the second outer casing 20 has a plurality of skidproof pads 201 disposed on the rear surface thereof for contacting the first outer casing 10, thus the portable electronic device P can be obliquely disposed on the base seat 17 and leaned against the first outer casing 10 through the skidproof pads 201 of the wireless receiving module 2 without using the positioning convex block 170 or the positioning concave groove 171.

When the first outer casing 10 is inclined to a horizontal plane (not shown), the second outer casing 20 is obliquely disposed on the first outer casing 10, and the portable electronic device P is obliquely disposed on the second outer casing 20, thus it is convenient for the user to watch the information provided by the display of the portable electronic device P.

Therefore, the wireless charging device can be applied to charge the inclined portable electronic device P as a result of the design of "the first outer casing 10 is pivotally disposed on the base seat 17" and "the first outer casing 10 is inclined by a predetermined acute angle with respect to the base seat 17". Hence, when the first outer casing 10 is inclined to a horizontal plane, the second outer casing 20 is obliquely disposed on the first outer casing 10, and the portable electronic device P is obliquely disposed on the second outer casing 20, thus it is convenient for the user to watch the information provided by the display of the portable electronic device P.

The aforementioned descriptions merely represent the preferred embodiments of the instant disclosure, without any intention to limit the scope of the instant disclosure which is fully described only within the following claims. Various equivalent changes, alterations or modifications based on the claims of the instant disclosure are all, consequently, viewed as being embraced by the scope of the instant disclosure.

## Claims

1. A wireless charging device, comprising:
a wireless transmitting module (1) including a first outer casing (10), a power storage unit (11) disposed inside the first outer casing (10), a first control circuit unit (12) disposed inside the first outer casing (10) and electrically connected to the power storage unit (11), and a wireless transmitting unit (13) disposed inside the first outer casing (10) and electrically connected to the first control circuit unit (12) for generating electromagnetic fields; and
a wireless receiving module (2) including a second outer casing (20), a wireless receiving unit (21) disposed inside the second outer casing (20) for wirelessly receiving the electromagnetic fields generated by the wireless transmitting unit (13), a second control circuit unit (22) disposed inside the second outer casing (20) and electrically connected to the wireless receiving unit (21), and at least one electrical connector (23) exposed outside the second outer casing (20) and electrically connected between the second control circuit unit (22) and a portable electronic device (P);
wherein the wireless transmitting module (1) includes a base seat (17), the first outer casing (10) is pivotally disposed on the base seat (17), the first outer casing (10) is inclined by a predetermined acute angle (*θ*) with respect to the base seat (17), the second outer casing (20) is disposed on the first outer casing (10) and inclined to the base seat (17), and the portable electronic device (P) is disposed on the second outer casing (20) and inclined to the base seat (17).

2. The wireless charging device of claim 1, wherein the first outer casing (10) has a placing platform (103) for carrying the wireless receiving module (2) and a non-slip structure (104) opposite to the placing platform (103), and both the at least one first receiving space (101) and the at least one second receiving space (102) are formed on the same lateral side of the first outer casing (10), wherein the wireless transmitting module (1) includes a transformer (14) disposed inside the first outer casing (10) and electrically connected to the power storage unit (11), a power input unit (15) electrically connected to the transformer (14), and at least one power output unit (16) electrically connected to the power storage unit (11).

3. The wireless charging device of claim 1, wherein the wireless receiving module (2) includes a support unit (24) connected to the second outer casing (20) for supporting the at least one electrical connector (23), the first outer casing (10) of the wireless transmitting module (1) has at least one first receiving space (101) corresponding to the second outer casing (20) and at least one second receiving space (102) corresponding to the at least one electrical connector (23), the second outer casing (20) has a first opening (1010) communicated with the at least one first receiving space (101) and a second opening (1020) communicated with the at least one second receiving space (102), the second outer casing (20) is received inside the at least one first receiving space (101) of the first outer casing (10) through the at least one first opening (1010), and the at least one electrical connector (23) is received inside the at least one second receiving space (102) of the first outer casing (10) through the at least one second opening (1020), wherein the first outer casing (10) has a first retaining structure (105) disposed inside the at least one first receiving space (101), the second outer casing (20) has a second retaining structure (200) corresponding to the first retaining structure (105), and the first outer casing (10) and the at least one electrical connector (23) are respectively retained inside the at least one first receiving space (101) and the at least one second receiving space (102) by matching the first retaining structure (105) and the second retaining structure (200).

4. The wireless charging device of claim 1, wherein the base seat (17) has a positioning convex block (170) or a positioning concave groove (171) on the top surface (1702) thereof, and the second outer casing (20) has a plurality of skidproof pads (201) disposed on the rear surface thereof for contacting the first outer casing (10).

5. The wireless charging device of claim 4, wherein one of short sides (1000) of the first outer casing (10) is pivotally disposed on one of short sides (1700) of the base seat (17), the second outer casing (20) is separated from the base seat (17) by a predetermined distance, and a bottom portion (P1) of the portable electronic device (P) is positioned between the positioning convex block (170) and the top surface (1702) of the base seat (17) or inside the positioning concave groove (171).

6. The wireless charging device of claim 4, wherein one of long sides of the first outer casing (10) is pivotally disposed on one of long sides of the base seat (17), the second outer casing (20) is separated from the base seat (17) by a predetermined distance, and a bottom portion (P1) of the portable electronic device (P) is positioned between the positioning convex block (170) and the top surface (1702) of the base seat (17) or inside the positioning concave groove (171).

7. A wireless charging device, comprising:
a wireless transmitting module (1) including a first outer casing (10) and a wireless transmitting unit (13) disposed inside the first outer casing (10) for generating electromagnetic fields; and
a wireless receiving module (2) including a second outer casing (20), a wireless receiving unit (21) disposed inside the second outer casing (20) for wirelessly receiving the electromagnetic fields generated by the wireless transmitting unit (13), and at least one electrical connector (23) exposed outside the second outer casing (20) and electrically contacting a portable electronic device (P);
wherein the wireless transmitting module (1) includes a base seat (17), the first outer casing (10) is pivotally disposed on the base seat (17), the first outer casing (10) is inclined by a predetermined acute angle (*θ*) with respect to the base seat (17), the second outer casing (20) is disposed on the first outer casing (10) and inclined to the base seat (17), and the portable electronic device (P) is disposed on the second outer casing (20) and inclined to the base seat (17).

8. The wireless charging device of claim 7, wherein the wireless receiving module (2) includes a support unit (24) connected to the second outer casing (20) for supporting the at least one electrical connector (23), the first outer casing (10) of the wireless transmitting module (1) has at least one first receiving space (101) for receiving the second outer casing (20) and at least one second receiving space (102) for receiving the at least one electrical connector (23), the second outer casing (20) has a first opening (1010) communicated with the at least one first receiving space (101) and a second opening (1020) communicated with the at least one second receiving space (102), the second outer casing (20) is received inside the at least one first receiving space (101) of the first outer casing (10) through the at least one first opening (1010), and the at least one electrical connector (23) is received inside the at least one second receiving space (102) of the first outer casing (10) through the at least one second opening (1020), wherein the first outer casing (10) has a first retaining structure (105) disposed inside the at least one first receiving space (101), the second outer casing (20) has a second retaining structure (200) corresponding to the first retaining structure (105), and the first outer casing (10) and the at least one electrical connector (23) are respectively retained inside the at least one first receiving space (101) and the at least one second receiving space (102) by matching the first retaining structure (105) and the second retaining structure (200).

9. The wireless charging device of claim 7, wherein the base seat (17) has a positioning convex block (170) or a positioning concave groove (171) on the top surface (1702) thereof, the second outer casing (20) has a plurality of skidproof pads (201) disposed on the rear surface thereof for contacting the first outer casing (10), the second outer casing (20) is separated from the base seat (17) by a predetermined distance, and a bottom portion (P1) of the portable electronic device (P) is positioned between the positioning convex block (170) and the top surface (1702) of the base seat (17) or inside the positioning concave groove (171).

10. A wireless charging device, comprising:
a wireless transmitting module (1) including a first outer casing (10), a power storage unit (11) disposed inside the first outer casing (10), a first control circuit unit (12) disposed inside the first outer casing (10) and electrically connected to the power storage unit (11), and a wireless transmitting unit (13) disposed inside the first outer casing (10) and electrically connected to the first control circuit unit (12) for generating electromagnetic fields; and
a wireless receiving module (2) including a second outer casing (20), a wireless receiving unit (21) disposed inside the second outer casing (20) for wirelessly receiving the electromagnetic fields generated by the wireless transmitting unit (13), a second control circuit unit (22) disposed inside the second outer casing (20) and electrically connected to the wireless receiving unit (21), and at least one electrical connector (23) exposed outside the second outer casing (20) and electrically connected between the second control circuit unit (22) and a portable electronic device (P);
wherein the first outer casing (10) is inclined to a horizontal plane, the second outer casing (20) is obliquely disposed on the first outer casing (10), and the portable electronic device (P) is obliquely disposed on the second outer casing (20).
